**Europäisches Patentamt**

**European Patent Office**

**Office européen des brevets**

(19)

(11) Veröffentlichungsnummer : **0 177 857 B1**

(12)

# EUROPÄISCHE PATENTSCHRIFT

(45) Veröffentlichungstag der Patentschrift :
07.09.88

(21) Anmeldenummer : 85112270.5

(22) Anmeldetag : 27.09.85

(51) Int. Cl.⁴ : **G 03 B 27/73, G 03 B 27/46**

(54) Verfahren und Vorrichtung zum Herstellen von Kopien schwierig zu kopierender Farbvorlagen.

(30) Priorität : 09.10.84 DE 3437069

(43) Veröffentlichungstag der Anmeldung :
16.04.86 Patentblatt 86/16

(45) Bekanntmachung des Hinweises auf die Patenterteilung : 07.09.88 Patentblatt 88/36

(84) Benannte Vertragsstaaten :
CH DE FR GB IT LI

(56) Entgegenhaltungen :
DE-A- 2 911 566
DE-A- 2 912 130
DE-A- 2 933 252
DE-B- 1 772 458
DE-B- 1 914 360
US-A- 4 260 244
US-A- 4 264 194
FERNSEH & KINO TECHNIK, Band 36, Nr. 9, September 1982, Seiten 345-350, Berlin; F. MENZEL "Rechnergestützte Lichtbestimmung und Steuerung von Farbkopiermaschinen"

(73) Patentinhaber : Agfa-Gevaert AG
Patentabteilung
D-5090 Leverkusen 1 (DE)

(72) Erfinder : Rauh, Hans-Jürgen, Dr.
Otkerstrasse 7
D-8000 München 90 (DE)
Erfinder : Findeis, Günter, Dipl.-Phys.
Wallbergstrasse 18d
D-8021 Sauerlach (DE)
Erfinder : Biedermann, Ernst, Dipl.-Phys.
Edelweissstrasse 6
D-8021 Taufkirchen (DE)
Erfinder : Knör, Bernhard, Dipl.-Ing.
Riedhauser Weg 12
D-8011 Höhenkirchen (DE)

EP 0 177 857 B1

## Beschreibung

Die Erfindung betrifft ein Verfahren zur Herstellung von Kopien schwierig zu kopierender Farbvorlagen und eine Vorrichtung zur Durchführung dieses Verfahrens.

Mit der Entwicklung hochintelligenter, aber auch komplizierter Verfahren zur automatischen Belichtungssteuerung beim Farbkopieren kann mehr und mehr auf eine Bedienungsperson am Kopiergerät verzichtet werden, die bei solchen Vorlagen z. B. mit starker Farbdominante oder starkem Farbstich entsprechende Korrekturwerte eingibt. Auch die Arbeitsgeschwindigkeit solcher Maschinen ist inzwischen so hoch geworden, daß eine Bedienungsperson diesem Arbeitstempo kaum folgen kann. Es werden deshalb vor allem im Amateurbereich die überwiegende Mehrzahl der Farbkopien in einem ersten automatischen Durchlauf erstellt, wobei unbefriedigende Kopien entweder von Hand oder durch eine automatische Zuführung zu der ursprünglich verwendeten Maschine unter Eingabe zusätzlicher Korrekturen wiederholt werden. Beim Wiederholen unbefriedigender Kopien mit einfacheren Geräten ist das Ergebnis schwer vorhersagbar, weil die Bedienungsperson in der Regel nicht genau nachvollziehen kann, welche Belichtungsbedingungen die automatische Belichtungssteuerung beim ersten Durchgang angewendet hat. Das Bemühen, die hochintelligente Auswertelogik des Erstkopiergerätes auch für Wiederholkopien zu verwenden, hat jedoch zur Folge, daß für eine relativ kleine Anzahl von Kopien eine sehr teure Einrichtung für eine gewisse Zeit mit sehr schlechtem Wirkungsgrad, nämlich mit der Langsamkeit einer Bedienungsperson, betrieben werden muß. Auch automatische Vorgabeeinrichtungen mit Bandtransportsystem lösen dieses Problem nicht, da das Anbringen der Vorlagen an einem solchen Trägerband einen zusätzlichen Arbeitsgang darstellt, für den erst Aufträge gesammelt werden müssen, damit sich die Umrüstung des teuren Gerätes lohnt. Bei der heutigen Schnelligkeit der Auftragserledigung ist jedoch eine solche Wartezeit sehr unerwünscht.

Aufgabe der Erfindung ist es, die Treffsicherheit bei der Herstellung von Wiederholkopien zu erhöhen, ohne einen vergleichbar großen Aufwand wie bei dem Erstkopiergerät zu betreiben.

Diese Aufgabe wird gelöst durch die im Anspruch 1 beschriebene Erfindung.

Die Erfindung geht aus von der Überlegung, daß eine gute Wiederholkopie nur ausgehend von den genauen Belichtungswerten der Erstkopie erreicht werden kann. Dies ist einmal möglich durch den Einsatz eines genau gleichen, zweiten Kopiergerätes oder auch des Erstkopiergerätes für die Wiederholkopien, was aber mit einem ganz erheblichen Aufwand verbunden ist. Auch meßtechnisch ist die Sache bei einem zweiten Kopiergerät für Wiederholkopien nicht ganz einfach, weil die Meßsysteme der beiden Geräte in der Eichung genau übereinstimmen müssen.

Die Erfindung erreicht dieses Ziel auf einem ganz anderen Weg, nämlich durch Speichern der bei der Erstkopie durch die intelligente Auswertelogik angewendeten Kopierlichtmengen in den drei Farben. Diese Speicherung ist sowohl durch Steuerung eines entsprechenden Druckers, der auf die Kopierückseite die Daten in Klarschrift oder in bar code aufdrucken kann, möglich, als auch durch Verwendung eines Speichers mit einer Magnetscheibe, einer sogenannten Floppy Disk. Nachdem der Rechner zur Steuerung des Erstkopiergerätes die Kopierlichtmengen in den drei Farben genau ausweist, ist diese Speicherung nicht schwierig. Es genügt nun, für die Zweitkopie ein um Größenordnungen einfacheres und preiswertes Gerät einzusetzen, das keine vergleichbar komplizierte Meßlogik enthält oder einsetzt. Vielmehr werden durch die Bedienungsperson, durch eine automatische Leseeinrichtung oder durch ein Abspielgerät der Floppy Disk die Kopierlichtmengen der Erstkopie unmittelbar als Basisdaten in das Kopiergerät für die Wiederholkopie eingegeben.

Zur Erzielung einer nun treffsicheren Wiederholkopie brauchen nur, ausgehend von der vorliegenden Kopie, die Korrekturwerte eingegeben zu werden, die zur Veränderung dieser Kopie zu einem befriedigenden Ergebnis notwendig sind. Erfahrungsgemäß ist die Bestimmung der Korrekturen, ausgehend von einer unbefriedigenden Erstkopie, wesentlich treffsicherer als bei einer völlig neuen Bestimmung der Kopierlichtmengen.

Das erfindungsgemäße Verfahren ist von ganz besonderem Vorteil, wenn etwa nach der Lehre der DE-B-1 914 360 für die Berechnung der Kopierlichtmengen in den drei Farben beim Erstkopieren eine größere Anzahl von Vorlagen, insbesondere alle kopierfähigen Vorlagen eines Films, ausgewertet werden und der Film nach der Entwicklung der Papierbilder zusammen mit den anderen Filmen und Bildern einer Rolle in Streifen zerschnitten wird. Eine Wiederholung der Erstmessung ist dann mit vertretbarem Aufwand überhaupt nicht mehr möglich.

Weitere Ausgestaltungen der Erfindung entsprechend den Unteransprüchen betreffen die Eichung des Zweitkopiergerätes in Anpassung an das Erstkopiergerät.

Eine Vorrieltung zur Durchführung des erfindungsgemäßen Verfahrens ergibt sich aus den Ansprüchen 8 und 11 im Zusammenhang mit der Beschreibung eines Ausführungsbeispiels, das anhand von Figuren eingehend beschrieben ist. Es zeigen :

Fig. 1 ein Erstkopiergerät mit intelligenter Bewertungslogik unter Auswertung einer größeren Anzahl von Vorlagen jeweils eines Films,

Fig. 2 schematisch eine Darstellung eines einfachen Kopiergerätes zur Erzeugung von Wiederholkopien und

Fig. 3 ein Prinzipschaltbild des Rechners mit Eingabebausteinen zur Steuerung des Kopiergerätes gemäß Fig. 2.

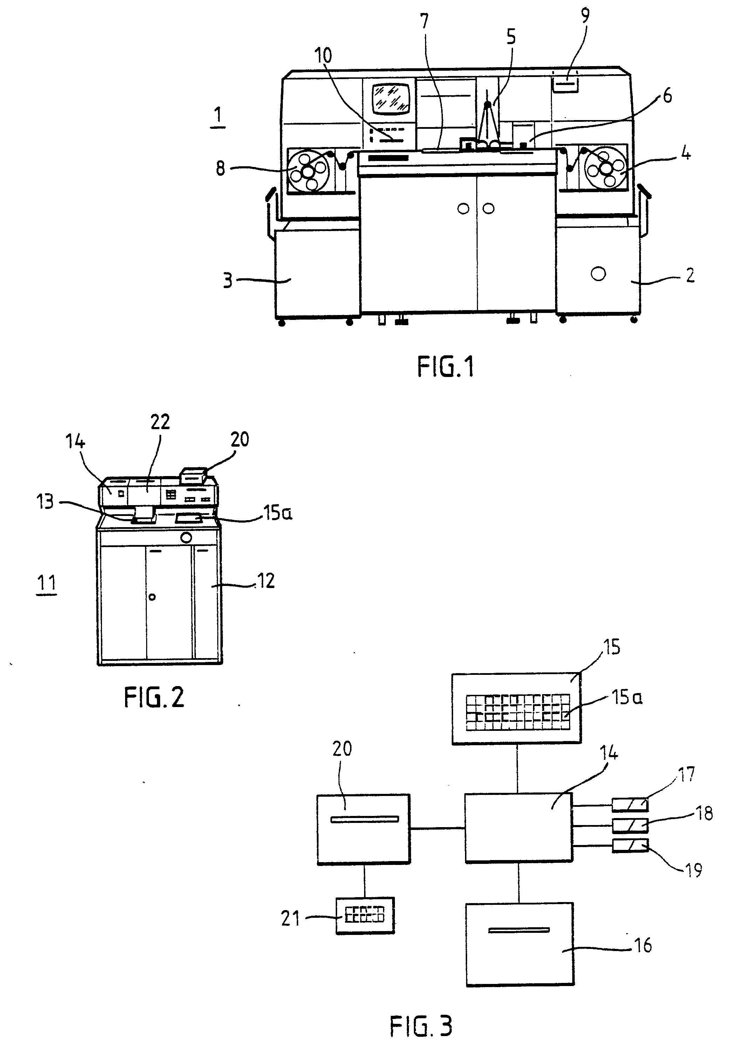

In Fig. 1 ist mit 1 das gesamte Kopiergerät zur Erstellung der Erstkopien, eine moderne Rollenkopiermaschine, bezeichnet. Diese umfaßt, am Boden stehend, eine Abwickelkassette 2 für Rollenkopiermaterial und eine baugleiche Aufwickelkassette 3, wobei das Rollenpapier lichtdicht abgeschirmt von der Kassette 2 durch das Innere des Kopiergerätes 1 in die Aufwickelkassette 3 gelangt. Im rechten Teil des Gerätes ist eine Abwickelspule 4 für ein Vorlagenband bezeichnet, das nacheinander von rechts nach links in dem Kopiergerät 1 eine Abtaststation 6, einen Speicher 5 und ein Kopierfenster 7 durchläuft, bevor es auf die Aufwickelspule 8 aufgewickelt wird. Im rechten oberen Teil des Gerätes ist ein Diskettenlaufwerk 9 angebracht mit einem Einführungsschlitz für Magnetscheiben, sogenannte Floppy Disks, dessen Funktion noch erläutert wird. Im linken Teil des Gerätes ist unter einem Anzeigebildschirm für Maschinenkommandos ein weiterer Eingabeschlitz 10 angeordnet, an dem Kopien von Eichvorlagen eingeschoben werden können, um nach dem Meßergebnis die Maschine in ihrer Eichung zu überprüfen bzw. automatisch nachzueichen. Dieses automatische Eichverfahren ist in der DE-A-2 911 566 ausführlich beschrieben. Anstelle des Magnetscheibenlaufwerks 9 kann auch an dem in Papierlaufrichtung hinteren Rand des nicht sichtbaren Kopierfensters ein Nadeldrucker vorgesehen sein, der auf die Rückseite des Kopiermaterialbandes während seines Transports aus dem Kopierfenster heraus Daten aufdruckt.

Das in Fig. 2 dargestellte Kopiergerät 11 ist um Größenordnungen einfacher als das Kopiergerät 1 gemäß Fig. 1. Es benötigt keinen automatischen Vorlagentransport und auch kein kompliziertes Meßsystem zur Auswertung der Kopiervorlagen. In dem verschlossenen Unterteil 12 befindet sich ein Papierlauf für Kopiermaterial gleicher Abmessungen, wie es in den Kassetten 2 und 3 enthalten ist. Unter einem Lampenhaus mit nicht geöffneter Abdeckung befindet sich ein Kopierfenster 13, in das von der Bedienungsperson das jeweils zu wiederholende Negativ eingeführt wird. Im rechten oberen Teil des Gerätes befindet sich wieder ein Laufwerk 20 für einen Magnetscheibenspeicher, so daß die von dem Laufwerk 9 kommenden Disketten ohne weiteres in dem Laufwerk 20 abgespielt werden können. Unter dem Laufwerk 20 befindet sich ein Tastenfeld 15a zur Eingabe von Korrekturwerten, das bei 15 in Fig. 3 schematisch dargestellt ist. Schließlich enthält das Gerät einen Rechner 14, dessen Funktion noch eingehend beschrieben ist. In dem Lampenhaus ist ferner eine weiße Lichtquelle vorhanden, die über einen Kondensor und einen Mischschacht die Vorlagen in dem Kopierfenster 13 ausleuchtet. In den Strahlengang einschiebbar sind in bekannter Weise drei subtraktive Filter der Farben cyan, magenta und gelb, die nach ihrem Einschieben jeweils die Einzelfarbbelichtungen in den entsprechenden Farben beenden. Die Filter sind angetrieben durch Magnete 17, 18 und 19, die von dem Rechner 14 gesteuert sind. Die Kopierlichtmengen in den einzelnen Farben werden deshalb über die Zeiten bis zum Einschieben der komplementärfarbigen Filter durch die Magnete 17, 18 und 19 bestimmt. Die Intensität der einzelnen Farben im Kopierlichtstrahlengang ist dabei einstellbar durch sogenannte Vorfilter, die eine maximale Absorption in der betreffenden Farbe haben und teilweise in den Strahlengang eingeführt werden.

In dem Prinzipschaltbild gemäß Fig. 3 ist an den Rechner 14 außer den Magneten 17 bis 19 der Lesekopf im Laufwerk 20 für die Magnetscheiben zum Einspeisen der Information über die Kopierlichtmengen bei der Erstkopie angeschlossen. An dem Laufwerk 20 hängt noch ein kleines Tastenfeld 21 zur Eingabe der Platzziffer einer Bildvorlage auf einem langen Filmstreifen, damit das Laufwerk jeweils die richtige Information über die Kopierlichtmengen bei der Erstkopie aus der Magnetscheibe ausliest. Ferner ist an den Rechner angeschlossen das Eingabetastenfeld 15a für die Korrekturwerte in den drei Farben und in der Dichte. Zum Beispiel ist für jede Korrekturstufe zwischen — 3 und + 3 in jeder der drei Farben und in der Dichte je eine Taste vorgesehen.

Schließlich ist an den Rechner angeschlossen ein Densitometer 16 für Kopien von einem Eichnegativ, durch welche die Eichung des Kopiergerätes 11 überprüft werden kann. Das Densitometer 16 entspricht insoweit dem Densitometer am Eingabeschlitz 10 am Erstkopiergerät 1.

Das Zusammenwirken der beschriebenen Geräte ist nun wie folgt :

Zu Beginn wird dem Kopiergerät 1 eine Rolle 4 von zu kopierenden Vorlagenstreifen zugeführt. Die Rolle wird durch das Gerät zur Aufwickelrolle 8 durchgezogen, wobei jeder einzelne Film von dem Scanner untersucht und alle für die Bemessung der Kopierlichtmengen erforderlichen Daten ausgemessen und in einen Rechner eingespeichert werden. In dem Speicher 5 wird der erste Film zwischengespeichert, bis für die erste im Kopierfenster 7 stehende Vorlage genügend Daten bei dem Rechner eingespeichert sind, der daraus etwa nach der Lehre der DT-A-2 912 130 die Kopierlichtmengen in den drei Farben errechnet. Danach erfolgt der Kopiervorgang, und für jede kopierte Vorlage werden die drei Kopierlichtmengen in logarithmischem Maßstab entweder durch das Laufwerk 9 codiert auf die Magnetscheibe oder durch den Nadeldrucker im Inneren des Gerätes auf die Papierrückseite aufgezeichnet. So folgt mit hoher Geschwindigkeit die Belichtung der einzelnen Vorlagen aufeinander, wobei jeweils auch das Kopiermaterial um eine Bildlänge transportiert wird. Zum Ende der Rolle 4 befinden sich alle Vorlagen auf der Spule 8 und in der Kassette 3 die unentwickelten, zugehörigen Kopien. Die Kassette 3 wird dann in bekannter Weise einem Rollenentwicklungsgerät zugeführt und wird nach dem Entwickeln und Trocknen visuell auf Bildqualität überprüft. Unbefriedigende Bilder, die bei einer Wiederholung ein besseres Bildergebnis erwarten lassen, werden z. B. durch einen Querstrich mit einem Fettstift maschinell erkennbar gekennzeichnet.

Die so gekennzeichnete Bildbandrolle kommt nun zusammen mit der Rolle von Vorlagen zu einem Schneid- und Verpackungsgerät, wo das Vorlagenband — getrennt nach einzelnen Aufträgen — in Streifen von vier oder fünf Vorlagen und das Bildband in einzelne Bilder zerschnitten werden. Aufträge ohne als zu wiederholend gekennzeichnete Bilder können dann fakturiert und geliefert werden. Aufträge mit wenigstens einem als zu wiederholend gekennzeichneten Bild werden ausgesondert und kommen zu einem Wiederholkopiergerät 11.

Im Fall magnetischer Datenspeicherung wird dort die zur Vorlagenrolle 8 gehörende Diskette in das Laufwerk 20 gegeben. Die Bedienungsperson entnimmt das zu wiederholende Bild aus dem Auftrag, gibt an dem Tastenfeld 21 die auf die Bildrückseite aufgedruckte, Ordnungszahl der Vorlage in der Rolle 8 nach Filmnummer und Vorlagennummer im Film ein, so daß das Laufwerk 20 die bei der Erstkopie verwendeten Kopierlichtmengen in den drei Farben für das betreffende Bild an den Rechner 14 übermitteln kann. Gleichzeitig gibt die Bedienungsperson nach Betrachtung des Bildes die erforderlichen Korrekturwerte in das Datenfeld 15a, so daß der Rechner bei Beginn des Belichtungsvorgangs die Kopierlichtmengen in den drei Farben umsetzen kann in Belichtungszeiten in den drei Farben, die jeweils durch Betätigen der Magnete 17, 18 und 19 beendet werden.

Die Magnetdisketten können nach Abschluß der Kopierarbeiten an dieser Vorlagenrolle gelöscht und für eine neue Rolle eingesetzt werden. Vörraussetzung für dieses Verfahren ist, daß die Intensität in den drei Farben zusammen mit den durch den Rechner vorgegebenen Belichtungszeiten die richtigen Kopierlichtmengen i × t ergeben. Um dies sicherzustellen, wird das Kopiergerät 11 geeicht. Dazu wird zunächst am Kopiergerät 1 von einer Eichvorlage eine Kopie erstellt. Dann wird die selbe Eichvorlage in das Kopiergerät 11 eingelegt, und sämtliche Korrekturwerte im Tastenfeld 15a auf Null gestellt. Bei richtiger Einstellung muß das Gerät dann eine Kopie produzieren, die in ihren Dichtewerten genau mit der Kopie von der Eichvorlage des Gerätes übereinstimmt. Das Densitometer 16 am Rechner 14 wird deshalb zunächst durch Einschieben der Eichkopie vom Gerät 1 als Sollwertvorgabe geeicht und dann durch Einlegen der vom Gerät 11 produzierten Kopie ebenfalls im Densitometer 16 überprüft. Das Nachstellen des Gerätes bei einem Abweichen der beiden Kopien von der selben Eichvorlage von den verschiedenen Geräten kann entweder in herkömmlicher Weise durch Drücken entsprechender Korrekturtasten und Übernahme der dann überprüften Korrekturen in den Speicher erfolgen oder durch einen automatischen Speicherabgleich, wie er in der DE-A-2 911 566 beschrieben ist.

Wenn in dem Kopiergerät 1 die Angaben über die drei Kopierlichtmengen nicht auf einen Magnetspeicher 9 aufgezeichnet werden, sondern in codierter Form auf die Rückseite der Kopien aufgedruckt wurden, so ist anstelle des Laufwerkes 20 eine Lesevorrichtung für die Bedruckung auf der Bildrückseite vorzusehen. Diese kann bekannter Bauart sein. Ein Eingeben einer Platzziffer der Vorlage ist dann nicht erforderlich, da in der Lesevorrichtung nur die Belichtungsdaten dieser Kopie zur Verfügung stehen.

Schließlich können die drei Kopierlichtmengen auch im Klartext auf der Kopierückseite ausgedruckt sein ; die Bedienungsperson hat dann diese Daten an einem entsprechenden Eingabefeld von Hand einzugeben.

Der Rechner 14 kann dabei ein Mikroprozessor bekannter Bauart, z. B. vom Typ Falcon der Firma Digital Equipment, sein.

Eine weitere Rationalisierungsmöglichkeit besteht darin, bei dem Beurteilungsvorgang die erforderlichen Korrekturen in codierter Form auf der Kopie selbst aufzubringen und die Korrekturwerteingabevorrichtung durch eine Lesevorrichtung dieser Daten von der Kopie zu ersetzen.

**Patentansprüche**

1. Verfahren zur Herstellung von Kopien schwierig zu kopierender Farbvorlagen, die unter Benützung eines Meßsystems in einem Erstkopiergerät nur unbefriedigend kopiert werden, gekennzeichnet durch die Kombination folgender Verfahrensschritte :

— Messen der Dichtewerte der zu kopierenden Vorlage und Belichten mit diese Meßwerte berücksichtigenden Kopierlichtmengen in den drei Farben im Erstkopiergerät,

— Speichern von Werten für die angewendeten Kopierlichtmengen bei Erstellung der Erstkopie in Zuordnung zu der Vorlage oder Kopie,

— Entwickeln des fotografischen Papiers, Beurteilen der Kopien auf Brauchbarkeit und Markieren unbefriedigender Kopien,

— Schneiden von Vorlagenstreifen und Kopien und Aussortieren der Aufträge mit unbefriedigenden Kopien und

— Wiederholen der unbefriedigenden Kopien in einem Kopiergerät, in dem ohne Benützung eines Meßsystems den gespeicherten Kopierlichtmengen die erforderlichen Korrekturen hinzugefügt und diese korrigierten Lichtmengen zur Steuerung der Belichtungseinrichtung herangezogen werden.

2. Verfahren nach Anspruch 1, dadurch gekennzeichnet, daß zum Speichern der Erstbelichtungswerte ein Magnetspeicher, insbesondere in Scheibenform, verwendet wird, auf dem in Zuordnung zu der Ordnungszahl der Vorlage auf dem Vorlagenstreifen die Kopierlichtmengen aufgezeichnet werden und daß von der Bedienungsperson am Zweitkopiergerät die auf der Kopierückseite aufgedruckte Ordnungszahl der Vorlage zum Auffinden der gespeicherten Belichtungswerte und die Korrekturen eingegeben werden.

3. Verfahren nach Anspruch 1, dadurch gekennzeichnet, daß zum Speichern der Erstbelichtungswerte in maschinen- oder visuell-lesbarer Form die Kopie selbst durch Aufdrucken auf deren Rückseite verwendet wird und daß die Erstbelichtungswerte am Zweitkopiergerät automatisch gelesen oder von Hand eingegeben werden.

4. Verfahren nach einem der vorangehenden Ansprüche, dadurch gekennzeichnet, daß das Zweitkopiergerät so geeicht wird, daß eine Kopie einer Eichvorlage ohne Eingabe von Korrekturen die selben Dichtewerte erreicht, wie eine Kopie der selben Eichvorlage von dem Erstkopiergerät.

5. Verfahren nach Anspruch 4, dadurch gekennzeichnet, daß das Zweitkopiergerät mit einem Densitometer zum Messen der Eichkopien verbunden ist und daß die Eichung unmittelbar durch Vergleich der Kopien der Eichvorlage von dem Erstkopiergerät mit der Kopie der Eichvorlage am Zweitkopiergerät derart durchgeführt wird, daß nach dem Eichvorgang die beiden Eichkopien gleiche Dichtewerte aufweisen.

6. Verfahren nach Anspruch 1, dadurch gekennzeichnet, daß die Kopierlichtmengenwerte auf der Kopierückseite im logarithmischen Maßstab in codierter Form gespeichert werden und daß diese Kopierlichtmengen am Zweitkopiergerät durch eine automatische Lesevorrichtung der Belichtungssteuervorrichtung zugeführt werden.

7. Verfahren nach Anspruch 1, dadurch gekennzeichnet, daß zur Ermittlung der Kopierlichtmengen für die Erstkopie die Dichtewerte einer größeren Anzahl der Vorlagen des Films als filmspezifische Werte und die der Vorlage als vorlagenspezifische Werte herangezogen werden.

8. Vorrichtung zur Durchführung des Verfahrens nach Anspruch 1, dadurch gekennzeichnet, daß bei dem Erstkopiergerät (1) ein Nadeldrucker angeordnet ist, der über einen Umsetzer von der Vorrichtung zum Errechnen der Kopierlichtmengen gesteuert ist und in bar code oder Klarschrift die Kopierlichtmengen und die Negativnummern auf die Kopierückseite ausdruckt.

9. Vorrichtung nach Anspruch 8, dadurch gekennzeichnet, daß mit der Belichtungssteuerung (14) des Zweitkopiergerätes (11) ein Leser für die rückseitige, codierte Aufzeichnung verbunden ist, sowie eine Eingabevorrichtung (15a) für Korrekturwerte.

10. Vorrichtung nach Anspruch 9, dadurch gekennzeichnet, daß die Eingabevorrichtung für Korrekturwerte eine Leseeinrichtung für codierte Korrekturwerte umfaßt, die im Zusammenhang mit der Beurteilung der Kopien aufbringbar sind.

11. Vorrichtung zur Durchführung des Verfahrens nach Anspruch 1, dadurch gekennzeichnet, daß an die Belichtungssteuervorrichtung des Erstkopiergerätes (1) ein magnetisches Aufzeichnungsgerät, insbesondere ein Magnetscheibenlaufwerk (9), angeschlossen ist, das die Kopierlichtmengenwerte in Zuordnung zu der Platzziffer der jeweiligen Vorlagen in dem Vorlagenstreifen aufzeichnet, und daß in dem Zweitkopiergerät eine Lesevorrichtung (20) für diese magnetischen Aufzeichnungen vorgesehen ist und davon eine Eingabevorrichtung (21) für die Platzziffer der zum Wiederholen anstehenden Vorlage angeschlossen ist.

## Claims

1. Process for the production of copies of colour originals which are difficult to copy and which give only unsatisfactory copies in a first copying apparatus using a measuring system, characterised by the combination of the following process steps :

— Measurement of the density values of the original to be copied and exposure in the first copying apparatus to light of the three colours in quantities taking into account these measured values,

— storage of values for the quantities of copying light employed for production of the first copy in association with the original or copy,

— development of the photographic paper, assessment of the copies for usability and marking of unsatisfactory copies,

— cutting of strips of original and copying and extraction of the jobs with unsatisfactory copies, and

— repetition of the unsatisfactory copies in a copying apparatus in which the necessary corrections are added to the memorized quantities of copying light without using a measuring system and these corrected quantities of light are used for controlling the exposure device.

2. Process according to claim 1, characterised in that a magnetic memory, in particular in disc form is used for storing the values of first exposure, on which memory the quantities of copying light are marked in association with the order number of the original on the original strip and in that the order number of the original printed on the back of the copy is fed into the second copying apparatus by the operator for finding the memorized exposure values and the corrections.

3. Process according to claim 1, characterised in that the copy itself is used for storage of the first exposure values in a mechanically or visually readable form by means of these values being printed on the back of the copy, and in that the first exposure values are automatically read on the second copying apparatus or fed into the said apparatus by hand.

4. Process according to one of the preceding claims, characterised in that the second copying apparatus is calibrated in such a manner that a copy of a calibrating original reaches the same density values without the input of corrections as a copy of the same calibrating original produced in the first copying apparatus.

5. Process according to claim 4, characterised in that the second copying apparatus is connected with a densitometer for measuring the calibrated copies and in that calibration is carried out directly by comparing the copies of the calibrating original obtained in the first copying apparatus with the copy of the calibrating original obtained in the second copying apparatus so that the two calibration copies have the same density values after the calibration process.

6. Process according to claim 1, characterised in that the values for the quantities of copying light are stored in coded form on the back of the copy on a logarithmic scale and in that these quantities of copying light are fed in the second copying apparatus into the exposure controlling apparatus by an automatic reading device.

7. Process according to claim 1, characterised in that for determining the quantities of copying light for the first copy, the density values of a relatively large number of originals of the film are used as film specific values and those of the original are used as original specific values.

8. Apparatus for carrying out the process according to claim 1, characterised in that a matrix printer is arranged in the first copying apparatus (1), which printer is controlled by the device for calculating the quantities of copying light by way of a converter and prints the quantities of copying light and the numbers of the negatives on the back of the copy in bar code or in clear.

9. Apparatus according to claim 8, characterised in that a reader for reading the coded information on the back and an input device (15a) for correction values are connected to the exposure control (14) of the second copying apparatus (11).

10. Apparatus according to claim 9, characterised in that the input device for correction values comprises a reading device for coded correction values which can be accessed in connection with the assessment of copies.

11. Apparatus for carrying out the process according to claim 1, characterised in that a magnetic recording apparatus, in particular a magnetic disc drive (9), is connected to the exposure control device of the first copying apparatus (1), which recording apparatus records the quantities of copying light in association with the place number of the given originals in the original strip, and in that the second copying apparatus has a reading device (20) for these magnetic recordings and an input device (21) is connected thereto for the place number of the original which is available for repetition.

## Revendications

1. Procédé de production de tirages d'originaux en couleurs difficiles à tirer, qui sont tirés de façon insatisfaisante dans une tireuse de premier tirage avec utilisation d'un système de mesure, caractérisé par la combinaison des phases de procédé suivantes :
— mesure des valeurs de densité de l'original à tirer et exposition avec des quantités de lumière de tirage qui tiennent compte de ces valeurs de mesure dans les trois couleurs dans la tireuse de premier tirage,
— mémorisation de valeurs correspondant aux quantités de lumière de tirage utilisées lors de la production du premier tirage, d'une façon coordonnée à l'original ou au tirage,
— développement du papier photographique, évaluation de la possibilité d'utilisation des tirages et marquage des tirages insatisfaisants,
— découpage des bandes d'originaux et des tirages et extraction des commandes comportant des tirages insatisfaisants, et
— retirage des tirages insatisfaisants dans une tireuse dans laquelle, sans utilisation d'un système de mesure, les corrections nécessaires sont ajoutées aux quantités de lumière de tirage mémorisées et ces quantités de lumière corrigées sont utilisées pour la commande du dispositif d'exposition.

2. Procédé selon la revendication 1, caractérisé en ce que, pour mémoriser les valeurs de la première exposition, on utilise une mémoire magnétique, en particulier sous la forme d'un disque, sur laquelle les quantités de lumière de tirage sont enregistrées, d'une façon coordonnée avec les numéros d'ordre de l'original dans la bande d'originaux et en ce que l'opérateur introduit dans la tireuse de deuxième tirage le numéro d'ordre de l'original imprimé sur le verso du tirage, pour retrouver les valeurs d'exposition mémorisées, et introduit également les corrections.

3. Procédé selon la revendication 1, caractérisé en ce que, pour mémoriser les valeurs de la première exposition sous une forme lisible par la machine ou lisible visuellement, on utilise le tirage lui-même, par impression de ces valeurs sur le verso de ce tirage et en ce que les valeurs de première exposition sont lues automatiquement dans la tireuse de deuxième tirage ou introduites manuellement dans cette tireuse.

4. Procédé selon une des revendications précédentes, caractérisé en ce que la tireuse de deuxième tirage est étalonnée de manière qu'un tirage d'un original étalon prenne sans introduction de correction les mêmes valeurs de densité qu'un tirage du même original étalon exécuté par la tireuse de premier tirage.

5. Procédé selon la revendication 4, caractérisé en ce que la tireuse de deuxième tirage est associée à un densitomètre destiné à mesurer les tirages étalons et en ce que l'étalonnage est exécuté directement par comparaison des tirages de l'original étalon exécutés par la tireuse de premier tirage avec le tirage de l'original étalon exécuté par la tireuse de deuxième tirage de telle manière qu'après l'étalonnage, les deux tirages étalons présentent les mêmes valeurs de densité.

6. Procédé selon la revendication 1, caractérisé en ce que les valeurs de quantités de lumière de tirage sont mémorisées sous une forme codée sur le verso du tirage, dans une échelle logarithmique, et en ce que ces quantités de lumière de tirage sont transmises à la tireuse de deuxième tirage par un dispositif lecteur automatique appartenant au dispositif de commande de l'exposition.

7. Procédé selon la revendication 1, caractérisé en ce que, pour calculer les quantités de lumière de tirage utilisées pour le premier tirage, on prend pour base les valeurs de densité d'un grand nombre des originaux de la pellicule, en qualité de valeurs spécifiques de la pellicule et celles de l'original en qualité de valeurs spécifiques de l'original.

8. Dispositif pour la mise en œuvre du procédé selon la revendication 1, caractérisé en ce que, dans la tireuse de premier tirage (1), est agencée une imprimante à aiguilles qui est commandée, par l'intermédiaire d'un convertisseur, par le dispositif destiné à calculer les quantités de lumière de tirage, et qui imprime sur le verso du tirage, en code barres ou en clair, les quantités de lumière du tirage et les numéros des négatifs.

9. Dispositif selon la revendication 8, caractérisé en ce qu'à la commande de l'exposition de la tireuse de deuxième tirage (11) sont connectés un lecteur destiné à lire l'enregistrement codé imprimé au verso, ainsi qu'un dispositif d'entrée (15a) pour les valeurs correctives.

10. Dispositif selon la revendication 9, caractérisé en ce que le dispositif d'entrée pour les valeurs correctives comprend un dispositif de lecture pour les valeurs correctives codées qui peuvent être introduites en combinaison avec l'évaluation des tirages.

11. Dispositif pour la mise en oeuvre du procédé selon la revendication 1, caractérisé en ce que, au dispositif de commande de l'exposition de la tireuse de premier tirage (1), est raccordé un appareil d'enregistrement magnétique, en particulier un lecteur enregistreur de disques magnétiques (9), qui enregistre les valeurs de quantités de lumière de tirage d'une façon coordonnée au numéro de l'emplacement des originaux considérés dans la bande d'originaux et en ce que, dans la tireuse de deuxième tirage, est prévu un dispositif lecteur (20) destiné à lire des enregistrements magnétiques, et qu'à ce lecteur est raccordé un dispositif d'introduction (21) permettant d'introduire les numéros d'emplacement des originaux qui sont à retirer.

FIG.1

FIG.2

FIG.3